# EUROPEAN PATENT APPLICATION

(11) **EP 4 704 243 A2**
(43) Date of publication of application: **04.03.2026**
(21) Application number: 25199207.9
(22) Date of filing: 29.08.2025
(51) Int. Cl.: H01M 50/46, H01M 50/466, H01M 10/0585, H01M 50/463, H01M 10/04

(54) **SECONDARY BATTERY AND ELECTRONIC APPARATUS**

(30) Priority: 31.08.2024 CN 202411216781
(71) Applicant: Ningde Amperex Technology Ltd., Ningde City, Fujian Province 352100 (CN)
(72) Inventor: LI, Sheng, Ningde City, Fujian Province, China, 352100 (CN)
(74) Representative: Icosa

(57) **Abstract**

A secondary battery (100A, 100B, 100C) includes an electrode assembly (10), where a thickness direction of the electrode assembly (10) is a first direction (Z), a length direction of the electrode assembly (10) is a second direction (Y), and a width direction of the electrode assembly (10) is a third direction (X). The electrode assembly (10) includes a plurality of electrode plates (20) and a plurality of separators (30). The plurality of electrode plates (20) are stacked along the first direction (Z). The plurality of electrode plates (20) include two outermost electrode plates (20A) located on two sides along the first direction (Z), sub-outermost electrode plates (20B) adjacent to the outermost electrode plates (20A), and an intermediate electrode plate (20C) located between the two sub-outermost electrode plates (20B). The plurality of separators (30) include two first separators (30A) located on two sides along the first direction (Z) and a second separator (30B) located between the two first separators (30A), where the first separator (30A) is located between the outermost electrode plate (20A) and the sub-outermost electrode plate (20B). Along the second direction (Y), a dimension of at least one of the first separators (30A) is greater than a dimension of the second separator (30B); and/or along the third direction (X), a dimension of at least one of the first separators (30A) is greater than a dimension of the second separator (30B).

## Description

### TECHNICAL FIELD

The present application relates to the field of energy storage technologies, and particularly to a secondary battery and an electronic apparatus.

### BACKGROUND

Laminated battery cells, with properties such as high energy density, low internal resistance, and long lifespan, have been widely applied in the field of lithium-ion batteries. In a drop event of the battery, the electrode assembly moves relative to the housing. In the thickness direction of the electrode assembly, the electrolyte concentrated on two sides of the electrode assembly exhibits a wave-like surge phenomenon, causing the separators located on the two sides of the electrode assembly to shrink under the impact of the electrolyte. This leads to a short circuit between the electrode plates on two sides of the separator, thereby affecting the safety of the battery.

### SUMMARY

In view of the above situation, the present application provides a secondary battery that is conducive to improving safety performance.

An embodiment of the present application provides a secondary battery. The secondary battery includes an electrode assembly, where a thickness direction of the electrode assembly is a first direction, a length direction of the electrode assembly is a second direction, a width direction of the electrode assembly is a third direction, and the first direction, the second direction, and the third direction are pairwise perpendicular. The electrode assembly includes a plurality of electrode plates and a plurality of separators. The plurality of electrode plates are stacked along the first direction. The plurality of electrode plates include two outermost electrode plates located on two sides along the first direction, sub-outermost electrode plates adjacent to the outermost electrode plates, and an intermediate electrode plate located between the two sub-outermost electrode plates. The plurality of separators include two first separators located on two sides along the first direction and a second separator located between the two first separators, where the first separator is located between the outermost electrode plate and the sub-outermost electrode plate. Along the second direction, a dimension of at least one of the first separators is greater than a dimension of the second separator; and/or along the third direction, a dimension of at least one of the first separators is greater than a dimension of the second separator.

In the above secondary battery, the first separator is located between the adjacent outermost electrode plate and sub-outermost electrode plate, and the second separator is located between the two first separators. In a drop event of the secondary battery, the first separators are subjected to a greater impact force from the electrolyte compared to the second separator, and thus are more prone to shrinkage. Along the second direction, the dimension of at least one of the first separators is greater than the dimension of the second separator; and/or along the third direction, the dimension of at least one of the first separators is greater than the dimension of the second separator, to increase a shrinkage allowance reserved for the first separators, thereby reducing the risk of a short circuit caused by contact between the two electrode plates on two sides of the first separators, and improving the safety performance of the secondary battery.

In some embodiments of the present application, the electrode plate includes a first side and a second side oppositely disposed along the second direction. The secondary battery includes a plurality of tabs, where the plurality of tabs are respectively connected to corresponding electrode plates and extend from the first side. The first separator includes a first edge and a third edge oppositely disposed along the second direction, and the second separator includes a second edge and a fourth edge oppositely disposed along the second direction. The first edge, the second edge, and the first side are located on the same side of the electrode assembly in the second direction. Along the second direction, the second edge is located outside the first side, and the first edge is located outside the second edge, so that the dimension of the first separator is greater than the dimension of the second separator in the second direction. Additionally, a position where the tabs extend is generally referred to as the head of the secondary battery. The above configuration is also conducive to reducing the risk of a short circuit at the head of the secondary battery, thereby improving the safety performance of the secondary battery. The third edge and the fourth edge are located on the same side of the electrode assembly.

In some embodiments of the present application, along the second direction, a distance between the first edge and the first side is W₁, and a distance between the second edge and the first side is W₂, where 1 mm ≤ W₁ ≤ 4 mm, and 1.5 ≤ W₁/W₂ ≤ 2, to improve the safety performance of the secondary battery and facilitate increasing the energy density of the secondary battery.

In some embodiments of the present application, the electrode plate includes a third side and a fourth side oppositely disposed in the third direction. The first separator includes a fifth edge and a seventh edge oppositely disposed along the third direction, and the second separator includes a sixth edge and an eighth edge oppositely disposed along the third direction. The fifth edge, the sixth edge, and the third side are located on the same side of the electrode assembly in the third direction. Along the third direction, the sixth edge is located outside the third side, and the fifth edge is located outside the sixth edge, so that the dimension of the first separator is greater than the dimension of the second separator in the third direction; and/or the seventh edge, the eighth edge, and the fourth side are located on the same side of the electrode assembly in the third direction, and along the third direction, the eighth edge is located outside the fourth side, and the seventh edge is located outside the eighth edge, so that the dimension of the first separator is greater than the dimension of the second separator in the third direction.

In some embodiments of the present application, along the third direction, a distance between the fifth edge and the third side is W₃, and a distance between the sixth edge and the third side is W₄, where 0.5 mm ≤ W₃ ≤ 2 mm, and 1.5 ≤ W₃/W₄ ≤ 2, to improve the safety performance of the secondary battery and facilitate increasing the energy density of the secondary battery; or along the third direction, a distance between the seventh edge and the fourth side is W₅, and a distance between the eighth edge and the fourth side is W₆, where 0.5 mm ≤ W₅ ≤ 2 mm, and 1.5 ≤ W₅/W₆ ≤ 2, to improve the safety performance of the secondary battery and facilitate increasing the energy density of the secondary battery.

In some embodiments of the present application, the plurality of separators are adhesive, a surface of the separator in the first direction adheres to the electrode plate, and portions of two adjacent separators located outside the electrode plate adhere to each other, to constrain the separators and restrict shrinkage of the separators, thereby improving the safety performance of the secondary battery.

In some embodiments of the present application, a peel strength between the separator and the corresponding electrode plate is greater than or equal to 2 N/m, to reduce the risk of misalignment between the separator and the corresponding electrode plate, thereby improving the safety performance of the secondary battery.

In some embodiments of the present application, the secondary battery includes a first adhesive member, and portions of two adjacent separators located outside the electrode plate are adhered by the first adhesive member, to constrain the separators and restrict shrinkage of the separators, thereby improving the safety performance of the secondary battery.

In some embodiments of the present application, the second separator includes a plurality of connecting segments and a plurality of main segments, the plurality of main segments are arranged along the first direction, two adjacent electrode plates are separated by the main segment, and the connecting segment connects two adjacent main segments, so that the second separator is a continuous structure, facilitating the assembly and formation of the electrode assembly, and also enabling the second separator to provide better isolation between the electrode plates.

In some embodiments of the present application, the secondary battery further includes a housing and a second adhesive member, where the electrode assembly and the second adhesive member are accommodated within the housing. The second adhesive member includes a first adhesive surface and a second adhesive surface oppositely disposed along the first direction, the first adhesive surface is adhered to the electrode assembly, and the second adhesive surface is adhered to the housing, to cushion the electrode assembly in a drop event of the secondary battery and reduce the risk of damage due to movement of the electrode assembly within the housing. The housing is a packaging bag.

An embodiment of the present application provides a secondary battery. The secondary battery includes an electrode assembly, where a thickness direction of the electrode assembly is a first direction, a length direction of the electrode assembly is a second direction, a width direction of the electrode assembly is a third direction, and the first direction, the second direction, and the third direction are pairwise perpendicular. The electrode assembly includes a plurality of electrode plates and a plurality of separators. The plurality of electrode plates are stacked along the first direction. The plurality of electrode plates include two outermost electrode plates located on two sides along the first direction, sub-outermost electrode plates adjacent to the outermost electrode plates, and an intermediate electrode plate located between the two sub-outermost electrode plates. The plurality of separators include two first separators located on two sides along the first direction, two third separators, and a second separator located between the two third separators. The first separator is located between the outermost electrode plate and the sub-outermost electrode plate. The third separator is located between the sub-outermost electrode plate and the intermediate electrode plate. Along the second direction, a dimension of at least one of the first separators is greater than a dimension of the second separator; and/or along the third direction, a dimension of at least one of the first separators is greater than a dimension of the second separator. Along the second direction, a dimension of at least one of the third separators is greater than a dimension of the second separator; and/or along the third direction, a dimension of at least one of the third separators is greater than a dimension of the second separator.

In the above secondary battery, in a drop event of the secondary battery, the first separators and the third separators are subjected to a greater impact force from the electrolyte compared to the second separator, and thus are more prone to shrinkage. Along the second direction, the dimension of at least one of the first separators is greater than the dimension of the second separator; and/or along the third direction, the dimension of at least one of the first separators is greater than the dimension of the second separator, to increase a shrinkage allowance reserved for the first separator, thereby reducing the risk of a short circuit caused by contact between the two electrode plates on two sides of the first separator, and improving the safety performance of the secondary battery. Along the second direction, the dimension of at least one of the third separators is greater than the dimension of the second separator; and/or along the third direction, the dimension of at least one of the third separators is greater than the dimension of the second separator, to increase a shrinkage allowance reserved for the third separator, thereby reducing the risk of a short circuit caused by contact between the two electrode plates on two sides of the third separator, and improving the safety performance of the secondary battery.

An embodiment of the present application provides a secondary battery. The secondary battery includes an electrode assembly, where a thickness direction of the electrode assembly is a first direction, a length direction of the electrode assembly is a second direction, a width direction of the electrode assembly is a third direction, and the first direction, the second direction, and the third direction are pairwise perpendicular. The electrode assembly includes a plurality of electrode plates and a plurality of separators. The plurality of electrode plates are stacked along the first direction. The plurality of electrode plates include two outermost electrode plates located on two sides along the first direction, sub-outermost electrode plates adjacent to the outermost electrode plates, third-layer electrode plates adjacent to the sub-outermost electrode plates, and an intermediate electrode plate located between the two third-layer electrode plates. The plurality of separators include two first separators located on the two sides along the first direction, two third separators, two fourth separators, and a second separator located between the two fourth separators. The first separator is located between the outermost electrode plate and the sub-outermost electrode plate. The third separator is located between the sub-outermost electrode plate and the third-layer electrode plate. The fourth separator is located between the third-layer electrode plate and the intermediate electrode plate. Along the second direction, a dimension of at least one of the first separators is greater than a dimension of the second separator; and/or along the third direction, a dimension of at least one of the first separators is greater than a dimension of the second separator. Along the second direction, a dimension of at least one of the third separators is greater than a dimension of the second separator; and/or along the third direction, a dimension of at least one of the third separators is greater than a dimension of the second separator. Along the second direction, a dimension of at least one of the fourth separators is greater than a dimension of the second separator; and/or along the third direction, a dimension of at least one of the fourth separators is greater than a dimension of the second separator.

In the above secondary battery, in a drop event of the secondary battery, the first separators, the third separators, and the fourth separators are subjected to a greater impact force from the electrolyte compared to the second separator, and thus are more prone to shrinkage. Along the second direction, the dimension of at least one of the first separators is greater than the dimension of the second separator; and/or along the third direction, the dimension of at least one of the first separators is greater than the dimension of the second separator, to increase a shrinkage allowance reserved for the first separator, thereby reducing the risk of a short circuit caused by contact between the two electrode plates on two sides of the first separator, and improving the safety performance of the secondary battery. Along the second direction, the dimension of at least one of the third separators is greater than the dimension of the second separator; and/or along the third direction, the dimension of at least one of the third separators is greater than the dimension of the second separator, to increase a shrinkage allowance reserved for the third separator, thereby reducing the risk of a short circuit caused by contact between the two electrode plates on two sides of the third separator, and improving the safety performance of the secondary battery. Along the second direction, the dimension of at least one of the fourth separators is greater than the dimension of the second separator; and/or along the third direction, the dimension of at least one of the fourth separators is greater than the dimension of the second separator, to increase a shrinkage allowance reserved for the fourth separator, thereby reducing the risk of a short circuit caused by contact between the two electrode plates on two sides of the fourth separator, and improving the safety performance of the secondary battery.

An embodiment of the present application further provides an electronic apparatus, where the electronic apparatus includes any one of the secondary batteries described in the above embodiments.

In the above electronic apparatus, the first separator is located between the adjacent outermost electrode plate and sub-outermost electrode plate, and the second separator is located between the two first separators. In a drop event of the secondary battery, the first separators are subjected to a greater impact force from the electrolyte compared to the second separator, and thus are more prone to shrinkage. Along the second direction, a dimension of at least one of the first separators is greater than a dimension of the second separator; and/or along the third direction, a dimension of at least one of the first separators is greater than a dimension of the second separator, to increase a shrinkage allowance reserved for the first separator, thereby reducing the risk of a short circuit caused by contact between the two electrode plates on two sides of the first separator, improving the safety performance of the secondary battery, and thus improving the safety performance of the electronic apparatus.

In some embodiments of the present application, the electronic apparatus includes a battery compartment and a third adhesive member, where the secondary battery is disposed in the battery compartment, and the third adhesive member is adhered between the battery compartment and the secondary battery in the first direction. Along the second direction, a dimension of the first separator adjacent to the third adhesive member is greater than a dimension of the second separator; and/or along the third direction, a dimension of the first separator adjacent to the third adhesive member is greater than a dimension of the second separator. In a drop event of the electronic apparatus, the side of the secondary battery connected to the third adhesive member is subjected to a greater impact compared to the side not connected to the third adhesive member, and the first separator adjacent to the third adhesive member is subjected to a greater impact force from the electrolyte compared to the second separator, and thus is more prone to shrinkage. Along the second direction, a dimension of the first separator adjacent to the third adhesive member is greater than a dimension of the second separator; and/or along the third direction, a dimension of the first separator adjacent to the third adhesive member is greater than a dimension of the second separator, to increase a shrinkage allowance reserved for the first separator, thereby reducing the risk of a short circuit caused by contact between the two electrode plates on two sides of the first separator adjacent to the third adhesive member, improving the safety performance of the secondary battery, and thus improving the safety performance of the electronic apparatus.

### BRIEF DESCRIPTION OF THE DRAWINGS

FIG. 1 is a structural schematic diagram of a secondary battery observed along a second direction according to an embodiment of the present application.
FIG. 2 is a structural schematic diagram of a secondary battery observed along a first direction according to an embodiment of the present application.
FIG. 3 is a structural schematic diagram of an adhesive separator of a secondary battery according to an embodiment of the present application.
FIG. 4 is a structural schematic diagram of a separator of a secondary battery that is adhered by a first adhesive member according to an embodiment of the present application.
FIG. 5 is a structural schematic diagram of a continuous structure of a second separator of a secondary battery according to an embodiment of the present application.
FIG. 6 is a structural schematic diagram of a second adhesive member of a secondary battery according to an embodiment of the present application.
FIG. 7 is a structural schematic diagram of a secondary battery observed along a second direction according to another embodiment of the present application.
FIG. 8 is a structural schematic diagram of a secondary battery observed along a second direction according to another embodiment of the present application.
FIG. 9 is a structural schematic diagram of an electronic apparatus according to an embodiment of the present application.

Description of reference signs for main components

| | |
|---|---|
| Secondary battery | 100A, 100B, 100C |
| Electronic apparatus | 200 |
| Electrode assembly | 10 |
| Electrode plate | 20 |
| Current collector | 201 |
| Active material layer | 202 |
| Outermost electrode plate | 20A |
| Sub-outermost electrode plate | 20B |
| Intermediate electrode plate | 20C |
| Third-layer electrode plate | 20D |
| First side | 21 |
| Second side | 22 |
| Third side | 23 |
| Fourth side | 24 |
| Separator | 30 |
| First separator | 30A |
| First edge | 30A1 |
| Third edge | 30A2 |
| Fifth edge | 30A3 |
| Seventh edge | 30A4 |
| Second separator | 30B |
| Second edge | 30B1 |
| Fourth edge | 30B2 |
| Sixth edge | 30B3 |
| Eighth edge | 30B4 |
| Connecting segment | 301 |
| Main segment | 302 |
| Third separator | 30C |
| Fourth separator | 30D |
| Tab | 40 |
| First tab | 41 |
| Second tab | 42 |
| First adhesive member | 50 |
| Housing | 60 |
| Second adhesive member | 70 |
| First adhesive surface | 71 |
| Second adhesive surface | 72 |
| Battery compartment | 80 |
| Third adhesive member | 90 |
| First direction | Z |
| Second direction | Y |
| Third direction | X |

The following detailed description will further illustrate the present application in conjunction with the above drawings.

### DETAILED DESCRIPTION

The technical solutions in some embodiments of the present application will be described below in conjunction with the drawings in these embodiments of the present application. Obviously, the described embodiments are only some of these embodiments of the present application, not all embodiments.

It should be noted that when one component is assumed to be "connected to" another component, it may be connected to the another component directly or there may be intervening elements present therebetween. When a component is deemed to be "disposed" on another component, it may be directly disposed on the another component, or there may be a component disposed in between.

When a value is considered to be "equal" to another value, it means that the two are equal within a set deviation, with the set deviation range being within 5%. In other words, when at least one of the two values fluctuates within the set deviation range, even if their values are not equal, they are still deemed substantially equal. When a value is considered to have a ratio of "1:1" with another value, it means that the two are equal within a set deviation, with the set deviation range being within 5%. Put another way, when at least one of the two values fluctuates within the set deviation range, even if their values are not equal, their ratio is still deemed equal.

Unless otherwise defined, all technical and scientific terms used herein have the same meaning as commonly understood by those skilled in the technical field of the present application. The terms used in the specification of the present application herein are only for the purpose of describing specific embodiments and are not intended to limit the present application. The term "and/or" used herein includes any and all combinations of one or more associated items listed. The term "overlap" used herein refers to the projections of two components partially overlapping or the projections of two components coinciding.

An embodiment of the present application provides a secondary battery. The secondary battery includes an electrode assembly, where a thickness direction of the electrode assembly is a first direction, a length direction of the electrode assembly is a second direction, a width direction of the electrode assembly is a third direction, and the first direction, the second direction, and the third direction are pairwise perpendicular. The electrode assembly includes a plurality of electrode plates and a plurality of separators. The plurality of electrode plates are stacked along the first direction. The plurality of electrode plates include two outermost electrode plates located on two sides along the first direction, sub-outermost electrode plates adjacent to the outermost electrode plates, and an intermediate electrode plate located between the two sub-outermost electrode plates. The plurality of separators include two first separators located on the two sides along the first direction and a second separator located between the two first separators, where the first separator is located between the outermost electrode plate and the sub-outermost electrode plate. Along the second direction, a dimension of at least one of the first separators is greater than a dimension of the second separator; and/or along the third direction, a dimension of at least one of the first separators is greater than a dimension of the second separator.

In the above secondary battery, the first separator is located between the adjacent outermost electrode plate and sub-outermost electrode plate, and the second separator is located between the two first separators. In a drop event of the secondary battery, the first separators are subjected to a greater impact force from the electrolyte compared to the second separator, and thus are more prone to shrinkage. Along the second direction, the dimension of at least one of the first separators is greater than the dimension of the second separator; and/or along the third direction, the dimension of at least one of the first separators is greater than the dimension of the second separator, to increase a shrinkage allowance reserved for the first separator, thereby reducing the risk of a short circuit caused by contact between the two electrode plates on two sides of the first separators, and improving the safety performance of the secondary battery.

Some embodiments of the present application will be further described below in conjunction with the accompanying drawings.

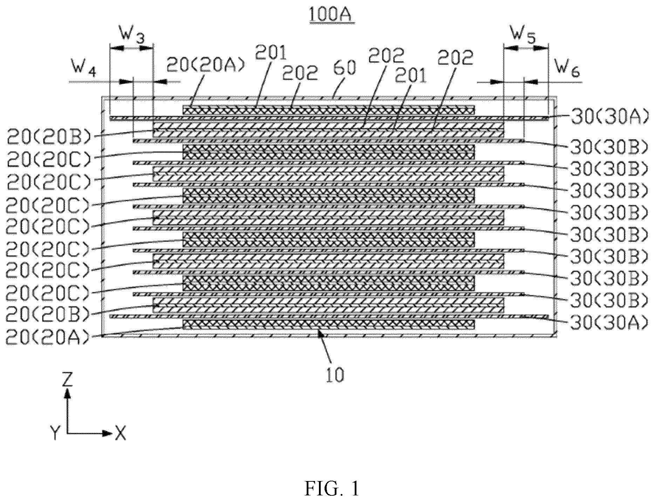

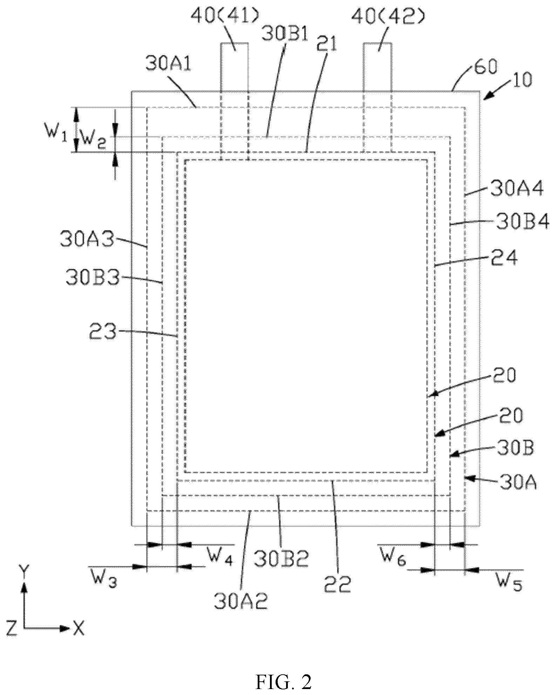

Referring to FIG. 1 and FIG. 2 together, an embodiment of the present application provides a secondary battery 100A. The secondary battery 100A refers to a battery that can be recharged to activate the active material for continued use after discharge.

The secondary battery 100A includes an electrode assembly 10, where the electrode assembly 10 is configured to convert chemical energy into electrical energy. A thickness direction of the electrode assembly 10 is a first direction Z. The electrode assembly 10 includes four sequentially connected sides, and when observed along the first direction Z, the four sides form an approximately rectangular shape. A length direction of the electrode assembly 10 is a second direction Y, a width direction of the electrode assembly 10 is a third direction X, and the first direction Z, the second direction Y, and the third direction X are pairwise perpendicular.

The electrode assembly 10 includes a plurality of electrode plates 20 and a plurality of separators 30. The plurality of electrode plates 20 are stacked along the first direction Z. Each of the electrode plates 20 includes a current collector 201 and an active material layer 202, where at least one surface of the current collector 201 in the first direction Z is provided with the active material layer 202.

The plurality of electrode plates 20 include two outermost electrode plates 20A located on two sides along the first direction Z, sub-outermost electrode plates 20B adjacent to the outermost electrode plates 20A, and an intermediate electrode plate 20C located between the two sub-outermost electrode plates 20B. Along the first direction Z, polarities of two adjacent electrode plates 20 are opposite.

The plurality of separators 30 include two first separators 30A located on two sides along the first direction Z and a second separator 30B located between the two first separators 30A. The first separator 30A is located between the outermost electrode plate 20A and the sub-outermost electrode plate 20B. A portion of the second separator 30B is located between the sub-outermost electrode plate 20B and the intermediate electrode plate 20C, and a portion of the second separator 30B is located between two adjacent intermediate electrode plates 20C. In a drop event of the secondary battery 100A, the first separators 30A are subjected to a greater impact force from the electrolyte compared to the second separator 30B, and thus are more prone to shrinkage.

Referring to FIG. 2, in some embodiments, along the second direction Y, a dimension of at least one of the first separators 30A is greater than a dimension of the second separator 30B, to increase a shrinkage allowance reserved for the first separator 30A in the second direction Y, thereby reducing the risk of a short circuit caused by contact between the two electrode plates 20 on two sides of the first separator 30A, and improving the safety performance of the secondary battery 100A.

Optionally, when the second separator 30B is provided in plurality, along the second direction Y, dimensions of the plurality of second separators 30B may be the same or different, and a dimension of at least one of the first separators 30A is greater than a maximum dimension of the second separators 30B.

Further, along the second direction Y, the dimensions of the two first separators 30A are greater than the dimension of the second separators 30B, to further increase the shrinkage allowance reserved for the first separators 30A in the second direction Y, thereby improving the safety performance of the secondary battery 100A.

In some embodiments, along the third direction X, a dimension of at least one of the first separators 30A is greater than a dimension of the second separator 30B, to increase a shrinkage allowance reserved for the first separator 30A in the third direction X, thereby reducing the risk of a short circuit caused by contact between the two electrode plates 20 on two sides of the first separator 30A, and improving the safety performance of the secondary battery 100A.

Optionally, when the second separator 30B is provided in plurality, along the third direction X, dimensions of the plurality of second separators 30B may be the same or different, and a dimension of at least one of the first separators 30A is greater than a maximum dimension of the second separators 30B.

Further, along the third direction X, the dimensions of two first separators 30A are greater than the dimension of the second separators 30B, to further increase the shrinkage allowance reserved for the first separators 30A in the third direction X, thereby improving the safety performance of the secondary battery 100A.

Optionally, a thickness direction of a portion of the separator 30 located outside the electrode plate 20 are the same as the first direction Z, or a portion of the separator 30 located outside the electrode plate 20 is bent.

It should be noted that the dimension of the first separator 30A is the dimension of the first separator 30A in an unfolded state (meaning that the thickness direction of the first separator 30A is the same as the first direction Z), and the dimension of the second separator 30B is the dimension of the second separator 30B in an unfolded state (meaning that the thickness direction of the second separator 30B is the same as the first direction Z).

In the above secondary battery 100A, the first separator 30A is located between the adjacent outermost electrode plate 20A and sub-outermost electrode plate 20B, and the second separator 30B is located between the two first separators 30A. In a drop event of the secondary battery 100A, the first separators 30A are subjected to a greater impact force from the electrolyte compared to the second separator 30B, and thus are more prone to shrinkage. Along the second direction Y, the dimension of at least one of the first separators 30A is greater than the dimension of the second separator 30B; and/or along the third direction X, the dimension of at least one of the first separators 30A is greater than the dimension of the second separator 30B, to increase a shrinkage allowance reserved for the first separator 30A, thereby reducing the risk of a short circuit caused by contact between the two electrode plates 20 on two sides of the first separator 30A, and improving the safety performance of the secondary battery 100A.

Referring to FIG. 2, in some embodiments, the electrode plate 20 includes a first side 21 and a second side 22 oppositely disposed along the second direction Y. The secondary battery 100A further includes a plurality of tabs 40, where the plurality of tabs 40 are respectively connected to corresponding electrode plates 20 and extend from the first side 21. An end of the tab 40 away from the electrode plate 20 is used for connection to an external circuit or electrode terminal.

Specifically, the plurality of tabs 40 include a first tab 41 and a second tab 42, where the first tab 41 is connected to an electrode plate 20 with positive polarity, and the second tab 42 is connected to an electrode plate 20 with negative polarity. Along the first direction Z, a projection of the electrode plate 20 with positive polarity is located within a projection of the electrode plate 20 with negative polarity, to reduce the risk of lithium precipitation at the edges of the electrode plate 20.

In some embodiments, the tab 40 is integrally formed with the electrode plate 20, to improve the connection stability between the tab 40 and the electrode plate 20, facilitate reducing internal resistance, and provide the advantage of a simple manufacturing process.

In some embodiments, the first separator 30A includes a first edge 30A1 and a third edge 30A2 oppositely disposed along the second direction Y, and the second separator 30B includes a second edge 30B 1 and a fourth edge 30B2 oppositely disposed along the second direction Y.

The first edge 30A1, the second edge 30B1, and the first side 21 are located on the same side of the electrode assembly 10 in the second direction Y. The third edge 30A2 and the fourth edge 30B2 are located on the same side of the electrode assembly 10 in the second direction Y.

Along the second direction Y, the second edge 30B1 is located outside the first side 21, and the first edge 30A1 is located outside the second edge 30B1, so that a dimension of the first separator 30A is greater than a dimension of the second separator 30B in the second direction Y. Additionally, a position where the tabs 40 extend is generally referred to as the head of the secondary battery 100A. The above configuration is also conducive to reducing the risk of a short circuit at the head of the secondary battery 100A, thereby improving the safety performance of the secondary battery 100A.

It should be noted that when dimensions of the plurality of electrode plates 20 are different, the first side 21 of the electrode plate 20 with a larger dimension is compared with the second edge 30B1. For example, if the dimension of the electrode plate 20 with negative polarity is greater than the dimension of the electrode plate 20 with positive polarity, the first side 21 of the electrode plate 20 with negative polarity is compared with the second edge 30B1.

In some embodiments, along the second direction Y, a distance between the first edge 30A1 and the first side 21 is W₁, and 1 mm ≤ W₁ ≤ 4 mm. When W₁ < 1 mm, the shrinkage allowance reserved for the first separator 30A in the second direction Y is small, which may easily cause a short circuit due to contact between the two electrode plates 20 on two sides of the first separator 30A. When W₁ > 4 mm, the first separator 30A occupies a larger space in the second direction Y, leading to space waste. Defining 1 mm ≤ W₁ ≤ 4 mm improves the safety performance of the secondary battery 100A, and facilitates increasing the energy density of the secondary battery 100A.

Optionally, W₁ may be one of 1 mm, 1.5 mm, 2 mm, 2.5 mm, 3 mm, 3.5 mm, 4 mm, or any other value within the range of 1 mm ≤ W₁ ≤ 4 mm.

In some embodiments, along the second direction Y, a distance between the second edge 30B1 and the first side 21 is W₂, and 1.5 ≤ W₁/W₂ ≤ 2. When W₁/W₂ < 1.5, the shrinkage allowance reserved for the first separator 30A in the second direction Y is small, which may easily cause a short circuit due to contact between the two electrode plates 20 on two sides of the first separator 30A. When W₁/W₂ > 2, the first separator 30A occupies a larger space in the second direction Y, leading to space waste. Defining 1.5 ≤ W₁/W₂ ≤ 2 improves the safety performance of the secondary battery 100A, and facilitates increasing the energy density of the secondary battery 100A.

Optionally, W₁/W₂ may be one of 1.5, 1.6, 1.7, 1.8, 1.9, 2, or any other value within the range of 1.5 ≤ W₁/W₂ ≤ 2.

It should be noted that W₁ and W₂ are measured as follows: the first separator 30A and the second separator 30B are unfolded so that the thickness direction of the first separator 30A, the thickness direction of the second separator 30B, and the thickness direction of the electrode plate 20 are the same as the first direction Z. Along the second direction Y, the distance between the first edge 30A1 and the first side 21 is measured to obtain W₁, and the distance between the second edge 30B1 and the first side 21 is measured to obtain W₂.

Referring to FIG. 2, in some embodiments, along the second direction Y, the fourth edge 30B2 is located outside the second side 22, and the third edge 30A2 is located outside the fourth edge 30B2, so that a dimension of the first separator 30A is greater than a dimension of the second separator 30B in the second direction Y.

It should be noted that when the dimensions of the plurality of electrode plates 20 are different, the second side 22 of the electrode plate 20 with a larger dimension is compared with the fourth edge 30B2.

It can be understood that, in other embodiments, along the second direction Y, a distance between the third edge 30A2 and the second side 22 is equal to a distance between the fourth edge 30B2 and the second side 22, to facilitate connection by an adhesive member, thereby improving the structural stability of the tail of the secondary battery 100A.

In some embodiments, the secondary battery 100A further includes an adhesive member, where two ends of the adhesive member are respectively adhered to two sides of the electrode assembly 10 along the first direction Z, the adhesive member wraps around the side of the electrode assembly 10 where the second side 22, the third edge 30A2, and the fourth edge 30B2 are located, and the adhesive member also adheres to the second side 22, the third edge 30A2, and the fourth edge 30B2, to constrain the separator 30 and restrict shrinkage of the separator 30.

Referring to FIG. 1 and FIG. 2, in some embodiments, the electrode plate 20 includes a third side 23 and a fourth side 24 oppositely disposed in the third direction X.

The first separator 30A includes a fifth edge 30A3 and a seventh edge 30A4 oppositely disposed along the third direction X. The second separator 30B includes a sixth edge 30B3 and an eighth edge 30B4 oppositely disposed along the third direction X. The fifth edge 30A3, the sixth edge 30B3, and the third side 23 are located on one side of the electrode assembly 10 in the third direction X. The seventh edge 30A4, the eighth edge 30B4, and the fourth side 24 are located on one side of the electrode assembly 10 in the third direction X.

In some embodiments, along the third direction X, the sixth edge 30B3 is located outside the third side 23, and the fifth edge 30A3 is located outside the sixth edge 30B3, so that a dimension of the first separator 30A is greater than a dimension of the second separator 30B in the third direction X.

It should be noted that when the dimensions of the plurality of electrode plates 20 are different, the third side 23 of the electrode plate 20 with a larger dimension is compared with the sixth edge 30B3.

In some embodiments, along the third direction X, a distance between the fifth edge 30A3 and the third side 23 is W₃, and 0.5 mm ≤ W₃ ≤ 2 mm. When W₃ < 0.5 mm, the shrinkage allowance reserved for the first separator 30A in the third direction X is small, which may easily cause a short circuit due to contact between the two electrode plates 20 on two sides of the first separator 30A. When W₃ > 2 mm, the first separator 30A occupies a larger space in the third direction X, leading to space waste. Defining 0.5 mm ≤ W₃ ≤ 2 mm improves the safety performance of the secondary battery 100A, and facilitates increasing the energy density of the secondary battery 100A.

Optionally, W₃ may be one of 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or any other value within the range of 0.5 mm ≤ W₃ ≤ 2 mm.

In some embodiments, along the third direction X, a distance between the sixth edge 30B3 and the third side 23 is W₄, and 1.5 ≤ W₃/W₄ ≤ 2. When W₃/W₄ < 1.5, the shrinkage allowance reserved for the first separator 30A in the third direction X is small, which may easily cause a short circuit due to contact between the two electrode plates 20 on two sides of the first separator 30A. When W₃/W₄ > 2, the first separator 30A occupies a larger space in the third direction X, leading to space waste. Defining 1.5 ≤ W₃/W₄ ≤ 2 improves the safety performance of the secondary battery 100A, and facilitates increasing the energy density of the secondary battery 100A.

Optionally, W₃/W₄ may be one of 1.5, 1.6, 1.7, 1.8, 1.9, 2, or any other value within the range of 1.5 ≤ W₃/W₄ ≤ 2.

It should be noted that W₃ and W₄ are measured as follows: the first separator 30A and the second separator 30B are unfolded so that the thickness direction of the first separator 30A, the thickness direction of the second separator 30B, and the thickness direction of the electrode plate 20 are the same as the first direction Z. Along the third direction X, the distance between the fifth edge 30A3 and the third side 23 is measured to obtain W₃, and the distance between the sixth edge 30B3 and the third side 23 is measured to obtain W₄.

Still referring to FIG. 1 and FIG. 2, in some embodiments, along the third direction X, the eighth edge 30B4 is located outside the fourth side 24, and the seventh edge 30A4 is located outside the eighth edge 30B4, so that a dimension of the first separator 30A is greater than a dimension of the second separator 30B in the third direction X.

It should be noted that when the dimensions of the plurality of electrode plates 20 are different, the fourth side 24 of the electrode plate 20 with a larger dimension is compared with the eighth edge 30B4.

In some embodiments, along the third direction X, a distance between the seventh edge 30A4 and the fourth side 24 is W₅, and satisfies the following relationship: 0.5 mm ≤ W₅ ≤ 2 mm. When W₅ < 0.5 mm, the shrinkage allowance reserved for the first separator 30A in the third direction X is small, which may easily cause a short circuit due to contact between the two electrode plates 20 on two sides of the first separator 30A. When W₅ > 2 mm, the first separator 30A occupies a larger space in the third direction X, leading to space waste. Defining 0.5 mm ≤ W₅ ≤ 2 mm improves the safety performance of the secondary battery 100A, and facilitates increasing the energy density of the secondary battery 100A.

Optionally, W₅ may be one of 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or any other value within the range of 0.5 mm ≤ W₅ ≤ 2 mm.

In some embodiments, a distance between the eighth edge 30B4 and the fourth side 24 is W₆, and 1.5 ≤ W₅/W₆ ≤ 2. When W₅/W₆ < 1.5, the shrinkage allowance reserved for the first separator 30A in the third direction X is small, which may easily cause a short circuit due to contact between the two electrode plates 20 on two sides of the first separator 30A. When W₅/W₆ > 2, the first separator 30A occupies a larger space in the third direction X, leading to space waste. Defining 1.5 ≤ W₅/W₆ ≤ 2 improves the safety performance of the secondary battery 100A, and facilitates increasing the energy density of the secondary battery 100A.

Optionally, W₅/W₆ may be one of 1.5, 1.6, 1.7, 1.8, 1.9, 2, or any other value within the range of 1.5 ≤ W₅/W₆ ≤ 2.

It should be noted that W₅ and W₆ are measured as follows: the first separator 30A and the second separator 30B are unfolded so that the thickness direction of the first separator 30A, the thickness direction of the second separator 30B, and the thickness direction of the electrode plate 20 are the same as the first direction Z. Along the third direction X, the distance between the seventh edge 30A4 and the fourth side 24 is measured to obtain W₅, and the distance between the eighth edge 30B4 and the fourth side 24 is measured to obtain W₆.

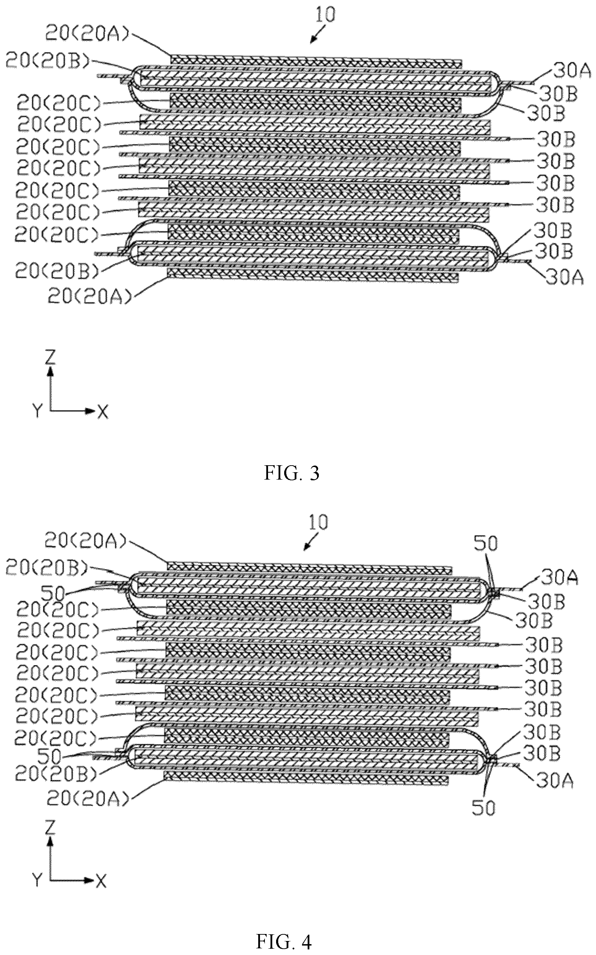

Referring to FIG. 3, in some embodiments, the plurality of separators 30 are adhesive, a surface of the separator 30 in the first direction Z adheres to the electrode plate 20, and portions of two adjacent separators 30 located outside the electrode plate 20 adhere to each other, to constrain the separators 30 and restrict shrinkage of the separators 30, thereby improving the safety performance of the secondary battery 100A. Specifically, a portion of the first separator 30A located outside the electrode plate 20 and portions of two adjacent second separators 30B located outside the electrode plate 20 at least partially overlap and adhere to each other.

In some embodiments, in the thickness direction of the separator 30, the separator 30 includes a bonding layer, a substrate layer, and a bonding layer that are stacked. The bonding layer is formed by a bonding agent coated on a surface of the substrate layer, and a ratio of a coating area of the bonding layer to an area of one side of the corresponding substrate layer is greater than or equal to 20%, to improve adhesion performance.

A material of the substrate layer is selected from at least one of polyolefin, polyvinylidene fluoride, polyethylene terephthalate, cellulose, polyimide, polyamide, spandex, or polyphthalamide.

The bonding layer further includes inorganic particles. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic particles are used to improve the heat resistance and puncture resistance strength of the separator 30.

It should be noted that different peel strengths can be achieved by using the same type of bonding agents with different contents or different peel strengths can be achieved by using different bonding agents.

In some embodiments, a peel strength between the first separator 30A and the corresponding electrode plate 20 is greater than or equal to 2 N/m, to reduce the risk of misalignment between the first separator 30A and the corresponding electrode plate 20, thereby improving the safety performance of the secondary battery 100A.

Optionally, the peel strength between the first separator 30A and the corresponding electrode plate 20 may be one of 2 N/m, 3 N/m, 4 N/m, 5 N/m, 6 N/m, 7 N/m, 8 N/m, 9 N/m, 10 N/m, 11 N/m, 12 N/m, or any other value within the range of greater than or equal to 2 N/m.

In some embodiments, a peel strength between the second separator 30B and the corresponding electrode plate 20 is greater than or equal to 2 N/m, to reduce the risk of misalignment between the second separator 30B and the corresponding electrode plate 20, thereby improving the safety performance of the secondary battery 100A.

Optionally, the peel strength between the second separator 30B and the corresponding electrode plate 20 may be one of 2 N/m, 3 N/m, 4 N/m, 5 N/m, 6 N/m, 7 N/m, 8 N/m, 9 N/m, 10 N/m, 11 N/m, 12 N/m, or any other value within the range of greater than or equal to 2 N/m.

Further, a peel strength between the separator 30 and the electrode plate 20 with positive polarity is greater than or equal to 3 N/m, to further reduce the risk of misalignment between the separator 30 and the electrode plate 20 with positive polarity, thereby improving the safety performance of the secondary battery 100A.

Further, a peel strength between the separator 30 and the electrode plate 20 with negative polarity is greater than or equal to 8 N/m, to further reduce the risk of misalignment between the separator 30 and the electrode plate 20 with negative polarity, thereby improving the safety performance of the secondary battery 100A.

It should be noted that in the present application, the peel strength between the separator 30 and the electrode plate 20 is tested in accordance with GB/T 2792-2014 " Measurement of Peel Adhesion Properties for Adhesive Tapes" using a high-speed tensile testing machine. The testing process is as follows: the secondary battery is discharged to 3.0 V, and then disassembled. The separator along with the adhered electrode plate is taken out as a whole, with the electrolyte on the surface wiped off using dust-free paper. The sample is then cut into strip samples of 10 mm × 30 mm. Along a length direction of the sample, one side of the electrode assembly in the sample is adhered to a steel plate using double-sided tape (Nitto 5000NS), with an adhesion length of not less than 10 mm. A steel plate is fixed at the corresponding position of the high-speed tensile testing machine, the end of the electrode plate not adhered to the separator in the sample is pulled up, and the sample is clamped in a chuck, where the pulled-up sample portion forms a 180° angle with the steel plate in space. The chuck pulls the sample at a speed of 5 ± 0.2 mm/s, and the average tensile force in the stable region is recorded as the peel strength between the separator and the electrode plate, denoted as F, with the unit being N/m.

Referring to FIG. 4, in some embodiments, the secondary battery 100A further includes a first adhesive member 50, and portions of two adjacent separators 30 located outside the electrode plate 20 are adhered by the first adhesive member 50, to constrain the separators 30 and restrict shrinkage of the separators 30, thereby improving the safety performance of the secondary battery 100A.

In some embodiments, the first adhesive member 50 is glue.

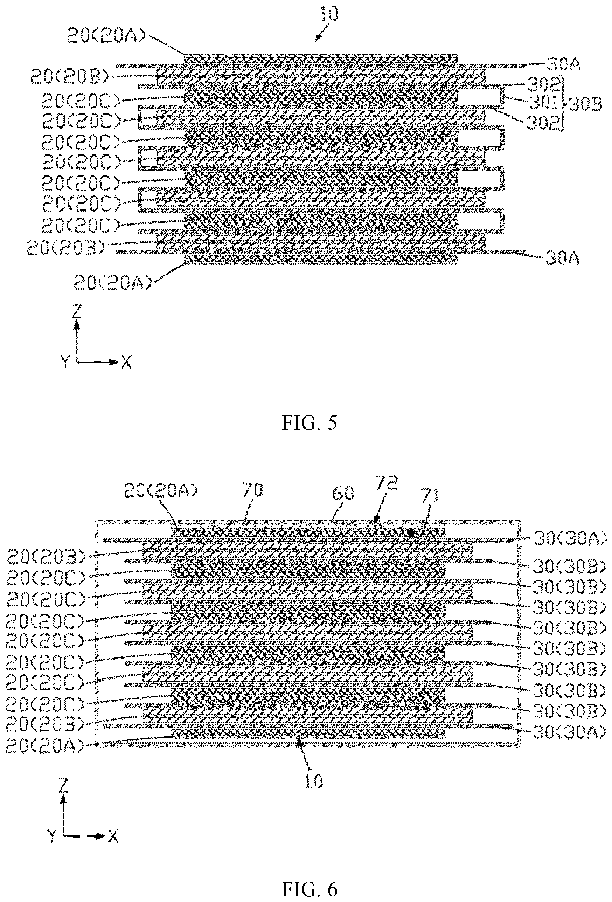

Referring to FIG. 5, in some embodiments, the second separator 30B includes a plurality of connecting segments 301 and a plurality of main segments 302, the plurality of main segments 302 are arranged along the first direction Z, two adjacent electrode plates 20 are separated by the main segment 302, and the connecting segment 301 connects two adjacent main segments 302, so that the second separator 30B is a continuous structure, facilitating the assembly and formation of the electrode assembly 10, and also enabling the second separator 30B to provide better isolation between the electrode plates 20.

Specifically, during the preparation process, the continuous second separator 30B is folded in a Z-shape to form a plurality of connecting segments 301 and a plurality of main segments 302.

Referring to FIG. 6, in some embodiments, the secondary battery 100A further includes a housing 60 and a second adhesive member 70. The electrode assembly 10 and the second adhesive member 70 are accommodated within the housing 60, and the tabs 40 are connected to the electrode assembly 10 and extend from the housing 60. Along the first direction Z, at least one side of the electrode assembly 10 is provided with the second adhesive member 70. The second adhesive member 70 includes a first adhesive surface 71 and a second adhesive surface 72 oppositely disposed along the first direction Z, the first adhesive surface 71 is adhered to the electrode assembly 10, and the second adhesive surface 72 is adhered to the housing 60, to cushion the electrode assembly 10 in a drop event of the secondary battery 100A and reduce the risk of damage due to movement of the electrode assembly 10 within the housing 60.

Optionally, the housing is a packaging bag or a hard shell, where the packaging bag is an aluminum-plastic film or a steel-plastic film, and the hard shell is a stainless steel shell, an aluminum shell, or the like.

In some embodiments, an outer surface of the current collector 201 of the outermost electrode plate is not provided with an active material layer 202. The first adhesive surface 71 is adhered to the outer surface of the outermost electrode plate.

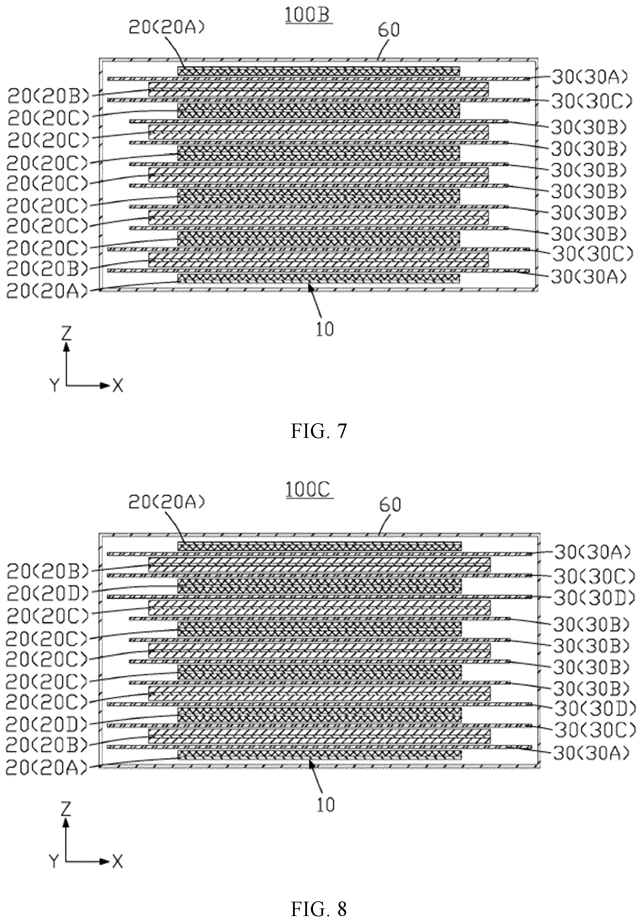

Referring to FIG. 7, an embodiment of the present application further provides a secondary battery 100B. A difference between the secondary battery 100B and the secondary battery 100A lies in that a third separator 30C is further defined.

The plurality of separators 30 include two first separators 30A located on two sides along the first direction Z, two third separators 30C, and a second separator 30B located between the two third separators 30C. The first separator 30A is located between the outermost electrode plate 20A and the sub-outermost electrode plate 20B. The third separator 30C is located between the sub-outermost electrode plate 20B and the intermediate electrode plate 20C. The second separator 30B is located between two adjacent intermediate electrode plates 20C. In a drop event of the secondary battery 100B, the first separators 30A and the third separators 30C are subjected to a greater impact force from the electrolyte compared to the second separator 30B, and thus are more prone to shrinkage.

In some embodiments, along the second direction Y, a dimension of at least one of the third separators 30C is greater than a dimension of the second separator 30B, to increase a shrinkage allowance reserved for the third separator 30C in the second direction Y, thereby reducing the risk of a short circuit caused by contact between the two electrode plates 20 on two sides of the third separator 30C, and improving the safety performance of the secondary battery 100B.

In some embodiments, along the third direction X, a dimension of at least one of the third separators 30C is greater than a dimension of the second separator 30B, to increase a shrinkage allowance reserved for the third separator 30C in the third direction X, thereby reducing the risk of a short circuit caused by contact between the two electrode plates 20 on two sides of the third separator 30C, and improving the safety performance of the secondary battery 100B.

Optionally, along the second direction Y, a dimension of the first separator 30A is greater than a dimension of the third separator 30C, or along the second direction Y, a dimension of the first separator 30A is equal to a dimension of the third separator 30C.

Optionally, along the third direction X, a dimension of the first separator 30A is greater than a dimension of the third separator 30C, or along the third direction X, a dimension of the first separator 30A is equal to a dimension of the third separator 30C.

Except for the above differences, parameters of the secondary battery 100B are substantially the same as those of the secondary battery 100A, and reference can be made to the description of the secondary battery 100A above.

Referring to FIG. 8, an embodiment of the present application further provides a secondary battery 100C. A difference between the secondary battery 100C and the secondary battery 100B lies in that a fourth separator 30D is further defined.

The plurality of electrode plates 20 include two outermost electrode plates 20A located on two sides along the first direction Z, sub-outermost electrode plates 20B adjacent to the outermost electrode plates 20A, third-layer electrode plates 20D adjacent to the sub-outermost electrode plates 20B, and an intermediate electrode plate 20C located between the two third-layer electrode plates 20D.

The plurality of separators 30 include two first separators 30A located on two sides along the first direction Z, two third separators 30C, two fourth separators 30D, and a second separator 30B located between the two fourth separators 30D. The first separator 30A is located between the outermost electrode plate 20A and the sub-outermost electrode plate 20B. The third separator 30C is located between the sub-outermost electrode plate 20B and the third-layer electrode plate 20D. The fourth separator 30D is located between the third-layer electrode plate 20D and the intermediate electrode plate 20C. The second separator 30B is located between two adjacent intermediate electrode plates 20C. In a drop event of the secondary battery 100C, the first separator 30A, the third separators 30C, and the fourth separators 30D are subjected to a greater impact force from the electrolyte compared to the second separator 30B, and thus are more prone to shrinkage.

In some embodiments, along the second direction Y, a dimension of at least one of the fourth separators 30D is greater than a dimension of the second separator 30B, to increase a shrinkage allowance reserved for the fourth separator 30D in the second direction Y, thereby reducing the risk of a short circuit caused by contact between the two electrode plates 20 on two sides of the fourth separator 30D, and improving the safety performance of the secondary battery 100C.

In some embodiments, along the third direction X, a dimension of at least one of the fourth separators 30D is greater than a dimension of the second separator 30B, to increase a shrinkage allowance reserved for the fourth separator 30D in the third direction X, thereby reducing the risk of a short circuit caused by contact between the two electrode plates 20 on two sides of the fourth separator 30D, and improving the safety performance of the secondary battery 100C.

Optionally, along the second direction Y, a dimension of the first separator 30A is greater than a dimension of the fourth separator 30D, or along the second direction Y, a dimension of the first separator 30A is equal to a dimension of the fourth separator 30D.

Optionally, along the third direction X, a dimension of the first separator 30A is greater than a dimension of the fourth separator 30D, or along the third direction X, a dimension of the first separator 30A is equal to a dimension of the fourth separator 30D.

Except for the above differences, parameters of the secondary battery 100C are substantially the same as those of the secondary battery 100B, and reference can be made to the description of the secondary battery 100B above.

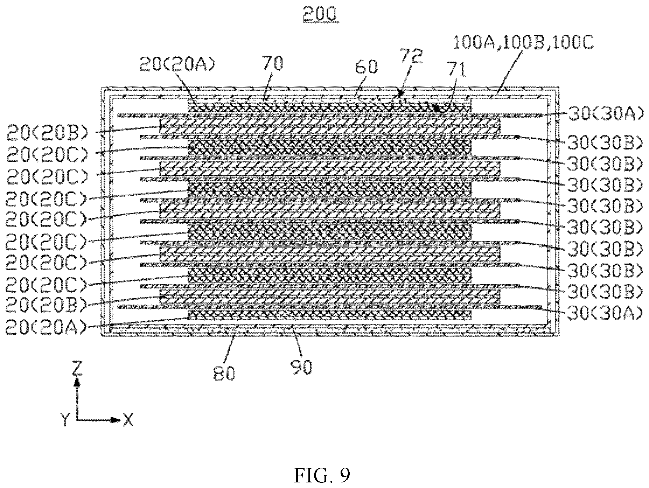

Referring to FIG. 9, in some embodiments, an embodiment of the present application further provides an electronic apparatus 200. The electronic apparatus 200 includes any one of the secondary batteries (100A, 100B, 100C) described in the above embodiments.

In the above secondary batteries (100A, 100B, 100C) and electronic apparatus 200, the first separator 30A is located between the adjacent outermost electrode plate 20A and sub-outermost electrode plate 20B, and the second separator 30B is located between the two first separators 30A. In a drop event of the secondary battery 100A, the first separators 30A are subjected to a greater impact force from the electrolyte compared to the second separator 30B, and thus are more prone to shrinkage. Along the second direction Y, a dimension of at least one of the first separators 30A is greater than a dimension of the second separator 30B; and/or along the third direction X, a dimension of at least one of the first separators 30A is greater than a dimension of the second separator 30B, to increase a shrinkage allowance reserved for the first separator 30A, thereby reducing the risk of a short circuit caused by contact between the two electrode plates 20 on two sides of the first separator 30A, improving the safety performance of the secondary battery 100A, and thus improving the safety performance of the electronic apparatus 200.

In some embodiments, the electronic apparatus 200 includes a battery compartment 80 and a third adhesive member 90, where the secondary battery (100A, 100B, 100C) is disposed in the battery compartment 80, and the third adhesive member 90 is adhered between the battery compartment 80 and the secondary battery (100A, 100B, 100C) in the first direction Z. In a drop event of the electronic apparatus 200, the side of the secondary battery (100A, 100B, 100C) connected to the third adhesive member 90 is subjected to a greater impact compared to the side not connected to the third adhesive member 90, and the first separator 30A adjacent to the third adhesive member 90 is subjected to a greater impact force from the electrolyte compared to the second separator 30B, and thus is more prone to shrinkage.

In some embodiments, along the second direction Y, a dimension of the first separator 30A adjacent to the third adhesive member 90 is greater than a dimension of the second separator 30B, to increase a shrinkage allowance reserved for the first separator 30A in the second direction Y, thereby reducing the risk of a short circuit caused by contact between the two electrode plates 20 on two sides of the first separator 30A, and improving the safety performance of the secondary battery 100A.

In some embodiments, along the third direction X, a dimension of the first separator 30A adjacent to the third adhesive member 90 is greater than a dimension of the second separator 30B, to increase a shrinkage allowance reserved for the first separator 30A in the third direction X, thereby reducing the risk of a short circuit caused by contact between the two electrode plates 20 on two sides of the first separator 30A, and improving the safety performance of the secondary battery 100A.

An embodiment of the present application further provides a preparation method of an electrode assembly, where the preparation method includes the following steps:

Stack a separator 30, an electrode plate 20 with negative polarity, and a separator 30 along a first direction Z and perform hot pressing on the stack to form an integral structure.

Stack the integral structure and an electrode plate 20 with positive polarity alternately along the first direction Z, where the plurality of separators 30 include two first separators 30A located on two sides in the first direction Z and a second separator 30B located between the two first separators 30A.

Shape the separator 30 so that, along the second direction Y, a dimension of at least one of the first separators 30A is greater than a dimension of the second separator 30B; and/or along the third direction X, a dimension of at least one of the first separator 30A is greater than a dimension of the second separator 30B.

The specific steps of hot pressing the separator 30, the electrode plate 20 with negative polarity, and the separator 30 are as follows: performing hot pressing on an overlapping portion of two separators 30 and the electrode plate 20 with negative polarity to adhere the two separators 30 to the electrode plate 20 with negative polarity, and performing hot pressing on portions of the two separators 30 located outside the electrode plate 20 with negative polarity to adhere the two separators 30 to each other.

In some embodiments, the two outermost electrode plates are electrode plates 20A with positive polarity, where an outer surface of the current collector 201 of the outermost electrode plate is not provided with an active material layer 202.

In some embodiments, in an integral structure, the two separators 30 are a continuous structure.

In the above preparation method of the electrode assembly, by stacking the separator 30, the electrode plate 20, and the separator 30 along the first direction Z and performing hot pressing on the stack to form an integral structure, the structural stability between the electrode plate 20 and the separators 30 is improved. By shaping the separators 30, a shrinkage allowance reserved for the first separator 30A is increased, thereby reducing the risk of a short circuit caused by contact between the two electrode plates 20 on two sides of the first separator 30A, and improving the safety performance of the secondary battery 100A.

The specific implementations of the secondary batteries in the examples and comparative examples are described below.

### 1. Secondary battery drop test:

A secondary battery was pre-treated at 25°C and left stand in a normal temperature environment for 60 minutes, after which the voltage of the secondary battery was measured before the drop test. The secondary battery was mounted in a fixture, and a drop test was conducted using drop equipment by allowing the battery to fall freely from a height of 1.5 meters above the ground in the following sequence: head - tail - head right corner - tail right corner - head left corner - tail left corner (angle: 45±15°), with the sequence repeated for 6 rounds. After the drop test was completed, the secondary battery was left stand at normal temperature for 24 hours, and the voltage of the secondary battery was measured and recorded. The appearance of the secondary battery was inspected and photographed before and after the test. The criteria for passing the drop test were as follows: no smoke, no leakage, and a voltage drop of less than 30 mV. A total of 100 battery cells were tested, with X cells passing the test, resulting in a pass rate of X/100.

### Example 1:

A secondary battery with an initial thickness of 5.9 mm at 50% SOC, a length of 100 mm, and a width of 50 mm was assembled as follows:
(1) Preparation of negative electrode plate: A negative electrode active material artificial graphite, conductive carbon black (Super P), and styrene-butadiene rubber (SBR) were mixed at a weight ratio of 96:1.5:2.5, and deionized water was added as a solvent into the mixture to prepare a slurry with a weight percentage of 50wt%. The slurry was stirred into uniformity and evenly coated on one surface of a copper foil and dried at 110°C to obtain a negative electrode plate coated with a negative electrode active material layer on one surface. When a double-sided coated negative electrode plate was prepared, the above steps were repeated on the other surface of the negative electrode plate to obtain a negative electrode plate coated with a negative electrode active material layer on both surfaces. The coated electrode plate was then cold-pressed to a thickness of 105 µm and slit, and a negative electrode tab was die-cut from the copper foil at the edge of the negative electrode plate, with the negative electrode tab being made of copper.
(2) Preparation of positive electrode plate: A positive electrode active material Lithium cobalt oxide (LiCoO₂), conductive carbon black (Super P), and polyvinylidene fluoride (PVDF) were mixed at a weight ratio of 97.5:1.0:1.5, and N-methylpyrrolidone (NMP) was added as a solvent into the mixture to prepare a slurry with a solid content of 75wt%. The slurry was stirred into uniformity and evenly coated on one surface of an aluminum foil and dried at 90°C to obtain a positive electrode plate coated with a positive electrode active material on one surface. When a double-sided coated positive electrode plate was prepared, the above coating steps were repeated on the other surface of the aluminum foil. The coated electrode plate was then cold-pressed to a thickness of 95 µm and slit, and a positive electrode tab was die-cut from the aluminum foil at the edge of the positive electrode plate, with the positive electrode tab being made of aluminum.
(3) Preparation of electrolyte: In a dry argon atmosphere, ethylene carbonate (EC), ethyl methyl carbonate (EMC), and diethyl carbonate (DEC) were mixed at a mass ratio of EC:EMC:DEC=30:50:20 to prepare a base organic solvent. Lithium salt lithium hexafluorophosphate (LiPF₆) was then added into the base organic solvent, dissolved, and mixed into uniformity to obtain an electrolyte with a lithium salt concentration of 1.15 mol/L.
(4) Preparation of separator: A three-layer separator was used. The three-layer separator included a bonding layer, a substrate layer, and another bonding layer that are stacked. The substrate layer was made of polyethylene (PE), a bonding agent in the bonding layer was PVDF, and the bonding layer further contained inorganic Al₂O₃ ceramic particles, with the bonding agent constituting 9% of the bonding layer.
(5) Preparation of electrode assembly: A positive electrode plate, a separator, and a negative electrode plate were stacked, and the separator was shaped such that only one side of the electrode assembly satisfies the condition that a dimension of a first separator located between the outermost electrode plate and a sub-outermost electrode plate was larger than a dimension of a second separator located between two first separators.
(6) Assembly of electrode assembly: An embossed aluminum-plastic film was placed in an assembly fixture with the concave surface facing upward, and the electrode assembly was placed in the concave pit, with an external force applied to press it tightly. Another embossed aluminum-plastic film was then placed over the electrode assembly with the concave surface facing downward, and the peripheries of the two aluminum-plastic films were heat-sealed by hot pressing to obtain an assembled electrode assembly.
(7) Electrolyte injection and packaging: Electrolyte was injected into the assembled electrode assembly, and vacuum packaging, standing, hot pressing formation, and shaping processes were performed to obtain a secondary battery. Along a thickness direction of the secondary battery, the secondary battery included a top end and a bottom end arranged opposite each other.

Comparative Example 1: The dimension of the first separator of the electrode assembly was the same as the dimension of the second separator. It should be noted that, except for the dimension of the first separator, all other parameters in Comparative Example 1 were the same as those in Example 1.

Comparative Example 2: The dimension of the first separator of the electrode assembly was smaller than the dimension of the second separator. It should be noted that, except for the dimension of the first separator, all other parameters in Comparative Example 2 were the same as those in Example 1.

**Table 1**

| (Examples 2 to 30 have the same parameters as Example 1 except for the parameters involved in Table 1.) | | | | | |
|---|---|---|---|---|---|
| Serial No. | Does only one side of the electrode assembly satisfy that a dimension of the first separator is greater than a dimension of the second separator? | Do only two sides of the electrode assembly satisfy that a dimension of the first separator is greater than a dimension of the second separator? | Do only three sides of the electrode assembly satisfy that a dimension of the first separator is greater than a dimension of the second separator? | Do all four sides of the electrode assembly satisfy that a dimension of the first separator is greater than a dimension of the second separator? | Drop test pass rate (%) |
| Comparative Example 1 | No | No | No | No | 18 |
| Comparative Example 2 | No | No | No | No | 10 |
| Example 1 | Yes | No | No | No | 42 |
| Example 2 | No | Yes | No | No | 61 |
| Example 3 | No | No | Yes | No | 78 |
| Example 4 | No | No | No | Yes | 88 |

From Comparative Examples 1 and 2 and Examples 1 to 4, it can be seen that by having a dimension of at least one of the first separators 30A greater than a dimension of the second separator 30B along the second direction Y; and/or a dimension of at least one of the first separators 30A greater than a dimension of the second separator 30B along the third direction X, the drop test pass rate of the secondary battery can be improved. Furthermore, the more the sides of the electrode assembly 10 that satisfy that a dimension of the first separator 30A is greater than a dimension of the second separator 30B, the higher the drop test pass rate.

**Table 2**

| (Examples 5 to 16 have the same parameters as Example 4 except for the parameters involved in Table 2.) | | | | |
|---|---|---|---|---|
| Serial No. | W₁ (mm) | W₃ (mm) | W₅ (mm) | Drop test pass rate (%) |
| Example 4 | 2.5 | 1.2 | 1.2 | 88 |
| Example 5 | 0.5 | 1.2 | 1.2 | 50 |
| Example 6 | 1 | 1.2 | 1.2 | 76 |
| Example 7 | 4 | 1.2 | 1.2 | 89 |
| Example 8 | 4.5 | 1.2 | 1.2 | 89 |
| Example 9 | 2.5 | 0.2 | 1.2 | 51 |
| Example 10 | 2.5 | 0.5 | 1.2 | 73 |
| Example 11 | 2.5 | 2 | 1.2 | 87 |
| Example 12 | 2.5 | 2.5 | 1.2 | 89 |
| Example 13 | 2.5 | 1.2 | 0.2 | 44 |
| Example 14 | 2.5 | 1.2 | 0.5 | 79 |
| Example 15 | 2.5 | 1.2 | 2 | 86 |
| Example 16 | 2.5 | 1.2 | 2.5 | 88 |

From Examples 4 to 8, it can be seen that by defining 1 mm ≤ W₁ ≤ 4 mm, the drop test pass rate of the secondary battery can be improved. It should be noted that when W₁ > 4 mm, the first separator 30A occupies a larger space in the second direction Y, leading to space waste, and may also reduce the sealing strength when the first separator 30A is sealed in a packaging bag.

From Examples 4, 9 to 12, it can be seen that by defining 0.5 mm ≤ W₃ ≤ 2 mm, the drop test pass rate of the secondary battery can be improved. It should be noted that when W₃ > 2 mm, the first separator 30A occupies a larger space in the third direction X, leading to space waste, and may also reduce the sealing strength when the first separator 30A is sealed in a packaging bag.

From Examples 4, 13 to 16, it can be seen that by defining 0.5 mm ≤ W₅ ≤ 2 mm, the drop test pass rate of the secondary battery can be improved. It should be noted that when W₅ > 2 mm, the first separator 30A occupies a larger space in the third direction X, leading to space waste, and may also reduce the sealing strength when the first separator 30A is sealed in a packaging bag.

**Table 3**

| (Examples 17 to 28 have the same parameters as Example 4 except for the parameters involved in Table 3.) | | | | |
|---|---|---|---|---|
| Serial No. | W₁/W₂ | W₃/W₄ | W₅/W₆ | Drop test pass rate |
| Example 4 | 1.8 | 1.8 | 1.8 | 88 |
| Example 17 | 1 | 1.8 | 1.8 | 66 |
| Example 18 | 1.5 | 1.8 | 1.8 | 75 |
| Example 19 | 2 | 1.8 | 1.8 | 89 |
| Example 20 | 2.5 | 1.8 | 1.8 | 90 |
| Example 21 | 1.8 | 1 | 1.8 | 70 |
| Example 22 | 1.8 | 1.5 | 1.8 | 82 |
| Example 23 | 1.8 | 2 | 1.8 | 89 |
| Example 24 | 1.8 | 2.5 | 1.8 | 90 |
| Example 25 | 1.8 | 1.8 | 1 | 72 |
| Example 26 | 1.8 | 1.8 | 1.5 | 80 |
| Example 27 | 1.8 | 1.8 | 2 | 87 |
| Example 28 | 1.8 | 1.8 | 2.5 | 89 |

From Examples 4, 17 to 20, it can be seen that by defining 1.5 ≤ W₁/W₂ ≤ 2, the drop test pass rate of the secondary battery can be improved. It should be noted that when W₁/W₂ > 2, the first separator 30A occupies a larger space in the third direction X, leading to space waste, and may also reduce the sealing strength when the first separator 30A is sealed in a packaging bag.

From Examples 4, 21 to 24, it can be seen that by defining 1.5 ≤ W₃/W₄ ≤ 2, the drop test pass rate of the secondary battery can be improved. It should be noted that when W₃/W₄ > 2, the first separator 30A occupies a larger space in the third direction X, leading to space waste, and may also reduce the sealing strength when the first separator 30A is sealed in a packaging bag.

From Examples 4, 25 to 28, it can be seen that by defining 1.5 ≤ W₅/W₆ ≤ 2, the drop test pass rate of the secondary battery can be improved. It should be noted that when W₅/W₆ > 2, the first separator 30A occupies a larger space in the third direction X, leading to space waste, and may also reduce the sealing strength when the first separator 30A is sealed in a packaging bag.

**Table 4**

| (Examples 29 to 32 have the same parameters as Example 4 except for the parameters involved in Table 4.) | | | | | |
|---|---|---|---|---|---|
| Serial No. | Does only one side of the electrode assembly satisfy that a dimension of the third separator is greater than a dimension of the second separator? | Do only two sides of the electrode assembly satisfy that a dimension of the third separator is greater than a dimension of the second separator? | Do only three sides of the electrode assembly satisfy that a dimension of the third separator is greater than a dimension of the second separator? | Do all four sides of the electrode assembly satisfy that a dimension of the third separator is greater than a dimension of the second separator? | Drop test pass rate |
| Example 4 | No | No | No | No | 88 |
| Example 29 | Yes | No | No | No | 89 |
| Example 30 | No | Yes | No | No | 92 |
| Example 31 | No | No | Yes | No | 93 |
| Example 32 | No | No | No | Yes | 95 |

From Examples 4, 29-32, it can be seen that by having a dimension of at least one of the third separators 30C greater than a dimension of the second separator 30B along the second direction Y; and/or a dimension of at least one of the third separators 30C greater than a dimension of the second separator 30B along the third direction X, the drop test pass rate of the secondary battery can be improved. Furthermore, the more the sides of the electrode assembly 10 that satisfy that a dimension of the third separator 30C is greater than a dimension of the second separator 30B, the higher the drop test pass rate.

**Table 5**

| (Examples 33 to 36 have the same parameters as Example 32 except for the parameters involved in Table 5.) | | | | | |
|---|---|---|---|---|---|
| Serial No. | Does only one side of the electrode assembly satisfy that a dimension of the fourth separator is greater than a dimension of the second separator? | Do only two sides of the electrode assembly satisfy that a dimension of the fourth separator is greater than a dimension of the second separator? | Do only three sides of the electrode assembly satisfy that a dimension of the fourth separator is greater than a dimension of the second separator? | Do all four sides of the electrode assembly satisfy that a dimension of the fourth separator is greater than a dimension of the second separator? | Drop test pass rate |
| Example 32 | No | No | No | No | 95 |
| Example 33 | Yes | No | No | No | 96 |
| Example 34 | No | Yes | No | No | 97 |
| Example 35 | No | No | Yes | No | 97 |
| Example 36 | No | No | No | Yes | 99 |

From Examples 32 to 36, it can be seen that by having a dimension of at least one of the fourth separators 30D greater than a dimension of the second separator 30B along the second direction Y; and/or a dimension of at least one of the fourth separators 30D greater than a dimension of the second separator 30B along the third direction X, the drop test pass rate of the secondary battery can be improved. Furthermore, the more the sides of the electrode assembly 10 that satisfy that a dimension of the fourth separator 30D is greater than a dimension of the second separator 30B, the higher the drop test pass rate.

In addition, those skilled in the art may make other changes within the spirit of the present application, and such changes made in accordance with the spirit of the present application should be included within the scope disclosed by the present application.

## Claims

1. A secondary battery (100A, 100B, 100C), **characterized in that** the secondary battery (100A, 100B, 100C) comprises an electrode assembly (10), a thickness direction of the electrode assembly (10) being a first direction (Z), a length direction of the electrode assembly (10) being a second direction (Y), a width direction of the electrode assembly (10) being a third direction (X), and the first direction (Z), the second direction (Y), and the third direction (X) being pairwise perpendicular; and the electrode assembly (10) comprises:
a plurality of electrode plates (20) stacked along the first direction (Z); the plurality of electrode plates (20) comprising two outermost electrode plates (20A) located on two sides along the first direction (Z), two sub-outermost electrode plates (20B) adjacent to the two outermost electrode plates (20A), and a plurality of intermediate electrode plates (20C) located between the two sub-outermost electrode plates (20B); and
a plurality of separators (30) comprising two first separators (30A) located on two sides along the first direction (Z) and a plurality of second separators (30B) located between the two first separators (30A), wherein one of the two first separators (30A) is located between one of the two outermost electrode plates (20A) and one of the two sub-outermost electrode plates (20B), and an other one of the two first separators (30A) is located between an other one of the two outermost electrode plates (20A) and an other one of the two sub-outermost electrode plates (20B); wherein
along the second direction (Y), a dimension of at least one of the two first separators (30A) is greater than a dimension of the plurality of second separators (30B), and/or
along the third direction (X), a dimension of at least one of the two first separators (30A) is greater than a dimension of the plurality of second separators (30B).

2. The secondary battery (100A, 100B, 100C) according to claim 1, **characterized in that** each of the plurality of electrode plates (20) comprises a first side (21) and a second side (22) oppositely disposed along the second direction (Y);
the secondary battery (100A, 100B, 100C) comprises a plurality of tabs (40), the plurality of tabs (40) being respectively connected to corresponding electrode plates (20) and extending from the first side (21); and
the first separator (30A) comprises a first edge (30A1) and a third edge (30A2) oppositely disposed along the second direction (Y), and each of the plurality of second separators (30B) comprises a second edge (30B1) and a fourth edge (30B2) oppositely disposed along the second direction (Y); wherein
the first edge (30A1), the second edge (30B1), and the first side (21) are located on the same side of the electrode assembly (10) in the second direction (Y); along the second direction (Y), the second edge (30B1) is located outside the first side (21), and the first edge (30A1) is located outside the second edge (30B1); and
the third edge (30A2) and the fourth edge (30B2) are located on the same side of the electrode assembly (10).

3. The secondary battery (100A, 100B, 100C) according to claim 2, **characterized in that** along the second direction (Y), a distance between the first edge (30A1) and the first side (21) is W₁, and a distance between the second edge (30B1) and the first side (21) is W₂, wherein 1 mm ≤ W₁ ≤ 4 mm, and 1.5 ≤ W₁/W₂ ≤ 2.

4. The secondary battery according to claim 1 or 2, **characterized in that** each of the plurality of electrode plates (20) comprises a third side (23) and a fourth side (24) oppositely disposed along the third direction (X);
the first separator (30A) comprises a fifth edge (30A3) and a seventh edge (30A4) oppositely disposed along the third direction (X), and each of the plurality of second separators (30B) comprises a sixth edge (30B3) and an eighth edge (30B4) oppositely disposed along the third direction (X); wherein
the fifth edge (30A3), the sixth edge (30B3), and the third side (23) are located on the same side of the electrode assembly (10) in the third direction (X), and along the third direction (X), the sixth edge (30B3) is located outside the third side (23), and the fifth edge (30A3) is located outside the sixth edge (30B3); and/or
the seventh edge (30A4), the eighth edge (30B4), and the fourth side (24) are located on the same side of the electrode assembly (10) in the third direction (X), and along the third direction (X), the eighth edge (30B4) is located outside the fourth side (24), and the seventh edge (30A4) is located outside the eighth edge (30B4).

5. The secondary battery (100A, 100B, 100C) according to claim 4, **characterized in that** along the third direction (X), a distance between the fifth edge (30A3) and the third side (23) is W₃, and a distance between the sixth edge (30B3) and the third side (23) is W₄, wherein 0.5 mm ≤ W₃ ≤ 2 mm, and 1.5 ≤ W₃/W₄ ≤ 2; or
along the third direction (X), a distance between the seventh edge (30A4) and the fourth side (24) is W₅, and a distance between the eighth edge (30B4) and the fourth side (24) is W₆, wherein 0.5 mm ≤ W₅ ≤ 2 mm, and 1.5 ≤ W₅/W₆ ≤ 2.

6. The secondary battery (100A, 100B, 100C) according to claim 1, **characterized in that** the plurality of separators (30) are adhesive, a surface of each separator (30) in the first direction (Z) adheres to one of the plurality of electrode plates (20), and portions of two adjacent separators (30) located outside each of the plurality of electrode plates (20) adhere to each other.

7. The secondary battery (100A, 100B, 100C) according to claim 6, **characterized in that** a peel strength between the separator (30) and the corresponding electrode plate (20) is greater than or equal to 2 N/m.

8. The secondary battery (100A, 100B, 100C) according to claim 1, **characterized in that** the secondary battery (100A, 100B, 100C) comprises a first adhesive member (50), and portions of two adjacent separators (30) located outside each of the plurality of electrode plates (20) are adhered by the first adhesive member (50).

9. The secondary battery (100A, 100B, 100C) according to claim 1, **characterized in that** each of the plurality of second separators (30B) comprises a plurality of connecting segments (301) and a plurality of main segments (302), the plurality of main segments (302) are arranged along the first direction (Z), two adjacent electrode plates (20) are separated by one of the plurality of main segments (302), and each connecting segment (301) connects two adjacent main segments (302).

10. The secondary battery (100A, 100B, 100C) according to claim 1, **characterized in that** the secondary battery (100A, 100B, 100C) further comprises a housing (60) and a second adhesive member (70), the electrode assembly (10) and the second adhesive member (70) are accommodated within the housing (60), the second adhesive member (70) comprises a first adhesive surface (71) and a second adhesive surface (72) oppositely disposed along the first direction (Z), the first adhesive surface (71) is adhered to the electrode assembly (10), the second adhesive surface (72) is adhered to the housing (60), and the housing (60) is a packaging bag.

11. The secondary battery (100A, 100B, 100C) according to claim 1, **characterized in that** the electrode assembly (10) comprises:
a plurality of separators (30) comprising two third separators (30C) located on two sides along the first direction (Z), and a plurality of second separators (30B) located between the two third separators (30C), wherein one of the two third separators (30C) is located between one of the sub-outermost electrode plates (20B) and one of the intermediate electrode plates (20C), and an other one of the two third separators (30C) is located between an other one of the sub-outermost electrode plates (20B) and an other one of the intermediate electrode plates (20C); wherein
along the second direction (Y), a dimension of at least one of the third separators (30C) is greater than a dimension of each of the plurality of second separators (30B); and/or along the third direction (X), a dimension of at least one of the third separators (30C) is greater than a dimension of each of the plurality of second separators (30B).

12. The secondary battery (100A, 100B, 100C) according to claim 11, **characterized in that** the electrode assembly (10) comprises:
a plurality of electrode plates (20) stacked along the first direction (Z), third-layer electrode plates (20D) adjacent to the sub-outermost electrode plates (20B), and intermediate electrode plates (20C) located between the two third-layer electrode plates (20D); and
a plurality of separators (30) comprising two fourth separators (30D) located on two sides along the first direction (Z), and a plurality of second separators (30B) located between the two fourth separators (30D), wherein one of the two third separators (30C) is located between one of the sub-outermost electrode plates (20B) and one of the third-layer electrode plates (20D), and an other one of the two third separators (30C) is located between an other one of the sub-outermost electrode plates (20B) and an other one of the third-layer electrode plates (20D); wherein one of the two fourth separators (30D) is located between one of the third-layer electrode plates (20D) and one of the intermediate electrode plates (20C), and an other one of the two fourth separators (30D) is located between an other one of the third-layer electrode plates (20D) and an other one of the intermediate electrode plates (20C); wherein
along the second direction (Y), a dimension of at least one of the fourth separators (30D) is greater than a dimension of each of the plurality of second separators (30B); and/or along the third direction (X), a dimension of at least one of the fourth separators (30D) is greater than a dimension of each of the plurality of second separators (30B).

13. An electronic apparatus (200), **characterized in that** the electronic apparatus (200) comprises the secondary battery (100A, 100B, 100C) according to any one of claims 1 to 12.

14. The electronic apparatus (200) according to claim 13, **characterized in that** the electronic apparatus (200) comprises a battery compartment (80) and a third adhesive member (90), wherein the secondary battery (100A, 100B, 100C) is disposed in the battery compartment (80), and the third adhesive member (90) is adhered between the battery compartment (80) and the secondary battery (100A, 100B, 100C) in the first direction (Z);
along the second direction (Y), a dimension of the first separator (30A) adjacent to the third adhesive member (90) is greater than a dimension of each of the plurality of second separators (30B); and/or
along the third direction (X), a dimension of the first separator (30A) adjacent to the third adhesive member (90) is greater than a dimension of each of the plurality of second separators (30B).
